# EUROPÄISCHE PATENTANMELDUNG

(11) **EP 1 876 062 A2**
(43) Veröffentlichungstag der Anmeldung: **09.01.2008**
(21) Anmeldenummer: 07012926.7
(22) Anmeldetag: 02.07.2007
(51) Int. Cl.: B60R 9/10, B60R 9/06

(54) **Lastenträger für Kraftfahrzeuge**

(30) Priorität: 08.07.2006 DE 102006031692
(71) Anmelder: Magna Car Top Systems GmbH, 74321 Bietigheim-Bissingen (DE)
(72) Erfinder: Bergerhoff, Harald, 22143 Hamburg (DE); Waller, Michael, 22549 Hamburg (DE); Hahn, Gerald, 21255 Wistedt (DE)

(57) **Zusammenfassung**

Dieser Lastenträger für Kraftfahrzeuge, insbesondere Personenkraftwagen, ist vorzugsweise zum Transport von wenigstens einem Fahrrad geeignet. Der Lastenträger besitzt einen Grundträger und einen Aufnahmeträger für das Fahrrad, wobei der Aufnahmeträger in Längsrichtung des Personenkraftwagens zwischen einer Ruhestellung und einer Betriebsstellung und vice versa verstellbar ist.

Um den Lastenträger bezüglich Funktion zu optimieren, ist zwischen Grundträger und Aufnahmeträger wenigstens eine Schalteinrichtung vorgesehen, die in Abhängigkeit der Ruhstellung bzw. der Betriebsstellung und/oder einer Zwischenstellung außerhalb der Ruhestellung bzw. Betriebsstellung des Aufnahmeträgers einen oder mehrere elektrische Verbraucher beeinflusst.

## Beschreibung

Die Erfindung bezieht sich auf einen Lastenträger für Kraftfahrzeuge, insbesondere für Personenkraftwagen, vorzugsweise für wenigstens ein Fahrrad.

Es ist ein aus einem Aufbau eines Kraftfahrzeugs herausziehbarer Lastenträger der eingangs beschrieben Gattung bekannt, DE 102 31 963 B4, der eine Lastenaufnahme aufweist. Die Lastenaufnahme ist mittels eines Schienensystems verschiebbar im Kraftfahrzeug gelagert. Bestandteil des Lastenträgers ist eine Fixierungseinrichtung, über die die Lastenaufnahme wahlweise in einer eingefahrenen Ruhestellung und einer ausgefahrenen Betriebsstellung festlegbar ist.

Aus der DE 44 41 853 A1 geht ein Kraftfahrzeug mit einem hinteren Stoßfänger hervor, der unter Zwischenschaltung mehrerer Profilstangen zwischen einer Ausfahrstellung und einer Ruhestellung verfahrbar ist. Stoßfänger und Profilstangen sind in der Weise ausgestaltet, dass sie als Trageinrichtung für Transportgut - Fahrräder- dienen.

Die DE 203 16 591 U1 gibt ein Kraftfahrzeug mit einer teleskopierbaren Stossstange wieder, die zur Aufnahme von Fahrrädern geeignet ist. Die Stossstange ist mit Kragträgern versehen, über die die Stoßstange in Endpositionen -Ruhestellung und Betriebstellung- verstellbar ist. Zwischen einem quer zur Fahrzeuglängsrichtung verlaufenden Fahrzeugrahmen ist eine Spreizvorrichtung vorgesehen, die federnd in Ausfahrrichtung der Stoßstange vorgespannt ist. Nach Entriegelung einer Sperreinrichtung fährt die Spreizvorrichtung selbsttätig in die Fahrräder aufnehmende Endposition aus.

Aufgabe der Erfindung ist es einen Lastenträger für Kraftfahrzeuge zu schaffen, der von einer Ruhestellung in eine Betriebstellung und umgekehrt bewegbar ist, wobei wenigstens eine der beiden Stellungen zur Kontaktierung von einem oder mehreren elektrischen Verbrauchern genutzt wird.

Nach der Erfindung wird diese Aufgabe durch die Merkmale des Patentanspruchs 1 gelöst. Weitere die Erfindung ausgestaltende Merkmale sind in den Unteransprüchen enthalten.

Die mit der Erfindung hauptsächlich erzielten Vorteile sind darin zu sehen, dass die Ruhestellung und/oder die Betriebsstellung des Aufnahmeträgers im Lastenträger auf einfache Weise durch die elektrische Schalteinrichtung erfassbar und definierte elektrische Verbraucher eines mit dem Lastenträger ausgestatteten Kraftfahrzeugs schaltbar sind. Als Verbraucher kann eine Warneinrichtung eingesetzt werden, die durch akustische oder visuelle Signale den Betreiber des Kraftfahrzeugs über korrekte oder etwa korrekturbedürftige Positionen des Aufnahmeträgers informiert. Darüber hinaus ist es möglich mit der Schalteinrichtung einen Verbraucher, der Rückleuchten für den Lastenträger umfasst, derart anzusteuern, dass besagte Rückleuchten in eingefahrener Ruhestellung des Aufnahmeträgers ausgeschaltet sind. Die Schalteinrichtung kann mechanisch betätigte Schalter aufweisen. Denkbar ist aber auch als Schalter Reed-Kontakt-Relais einzusetzen, die besonders für anspruchsvolle Endlagenerkennung geeignet sind und sich bei guter Funktion durch leichte Unterbringung und hohe Zuverlässigkeit auszeichnen.

In der Zeichnung wird ein Ausführungsbeispiel der Erfindung gezeigt, das nachstehend näher erläutert.

Es zeigen
Fig. 1 eine Schrägansicht auf einen Personenkraftwagen von hinten links mit dem erfindungsgemäßen Lastenträger,
Fig. 2 eine schematische Ansicht von oben auf den Lastenträger,
Fig. 3 eine Prinzipdarstellung elektrischer Verbraucher, die mit dem Lastenträger beeinflussbar sind,
Fig. 4 eine Ansicht entsprechend Fig. 3.

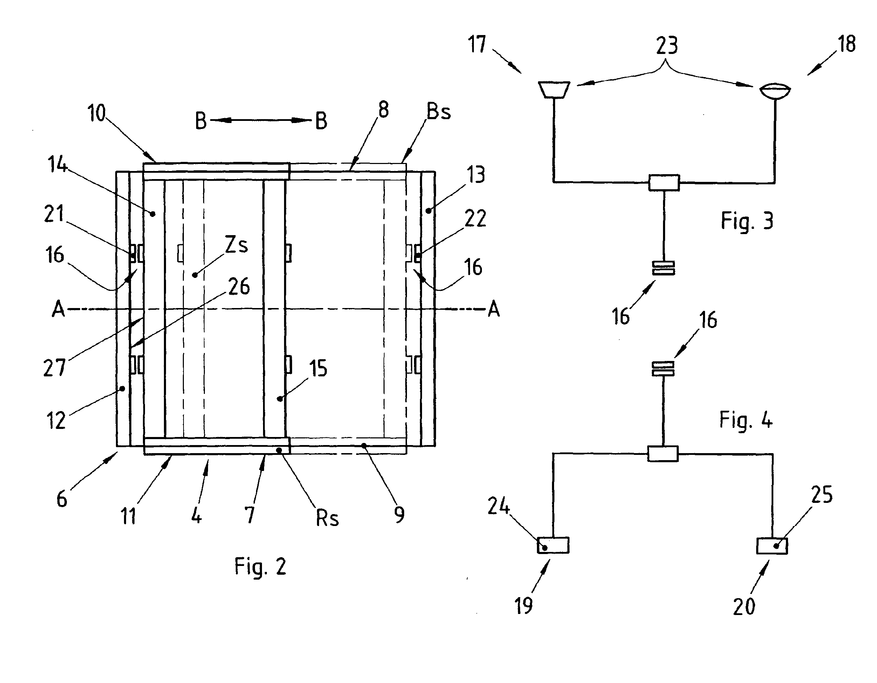

Von einem Kraftfahrzeug 1 der Gattung Personenkraftwagen ist lediglich ein Heckteil 2 dargestellt, das in einer Mittellängsebene A-A -Fig. 2- eine Öffnung 3 zum Ausfahren eines Lastenträgers 4 aufweist. Der Lastenträger 4 ist zum Transport eines Fahrrads 5 geeignet und umfasst einen Grundträger 6 und einen Aufnahmeträger 7 -Fig. 2-, an dem das quer zur Fahrzeuglängsrichtung B-B ausgerichtete Fahrrad 5 gehalten ist. Der Aufnahmeträger 7 ist in Fahrzeuglängsrichtung B-B zwischen einer Ruhestellung Rs und einer Betriebsstellung Bs und vice versa verstellbar ausgeführt. Hierzu sind am Grundträger 6 beiderseits der Mittellängsebene A-A innere Führungsschienen 8 und 9 vorgesehen, die mit äußeren Führungsschienen 10 und 11 des Aufnahmeträgers 7 zusammenarbeiten. Die innere Führungsschienen 8 und 9 sind mit einem vorderen Rahmenelement 12 und einem hinteren Rahmenelement 13 verbunden; die äußeren Führungsschienen 10 und 11 mit einem vorderen Rahmenelement 14 und einem hinteren Rahmenelement 15. Die Rahmenelemente 12 und 13 sowie die Rahmenelemente 14 und 15 verlaufen quer zur Fahrzeuglängsrichtung B-B und begrenzen den Grundträger 6 und den Aufnahmeträger 7.

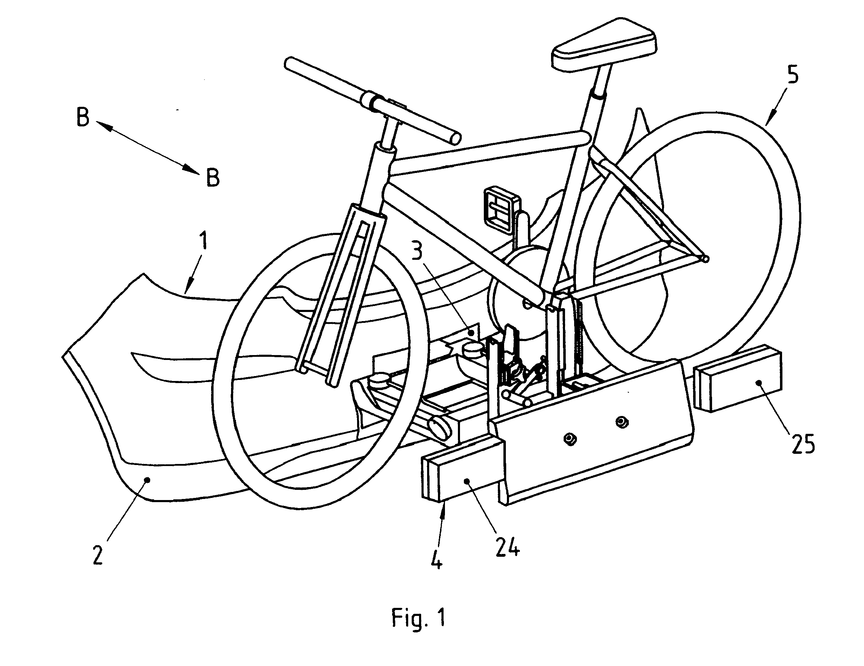

Zwischen Grundträger 6 und Aufnahmeträger 8 sind Schalteinrichtungen 16 angeordnet, die in Abhängigkeit der Ruhestellung Rs und der Betriebsstellung Bs bzw. einer Zwischenstellung Zs mehrere Verbraucher 17, 18 und 19, 20 beeinflussen. Die Schalteinrichtungen 16 weisen Schalter 21 und 22 auf, die in Ruhestellung Rs und Betriebsstellung Bs wirksam sind d.h. der Betreiber des Kraftfahrzeugs erhält die Information -LASTENTRÄGER IN BETRIEBSSTELUNG-oder -LASTENTRÄGER IN RUHESTELLUNG-. Möglich ist aber auch, dass die Schalteinrichtung 16 aufgrund der Zwischenstellung Zs über einen der Schalter 21 oder 22 eine an einer Schalttafel im Fahrgastraum des Kraftfahrzeugs -nicht gezeigtangebrachte Warneinrichtung 23 beeinflusst, dergestalt, dass sie akustische und/oder visuelle Signale erzeugt. Aber auch an anderer Stelle z.B. im Kofferraum des Kraftfahrzeugs 1 kann die Warneinrichtung 23 untergebracht werden. Darüber hinaus ist zweckmäßig mit der Schalteinrichtung 16 die als Heckleuchten 24 und 25 ausgebildeten Verbraucher 19 und 20 des Lastenträgers 5 zu schalten; denn bspw. in der Ruhestellung Rs des Lastenträgers 4 ist der Betrieb der von letzteren getrennten und z.B. im Kraftfahrzeug 1 untergebrachten Heckleuchten 24 und 25 - Fig. 1- nicht erforderlich, eventuell sogar unerwünscht.

Der Schalter 21 der Schalteinrichtung 16 ist zwischen dem vorderen Rahmenelement 12 des Grundträgers 6 und dem vorderen Rahmenelement 14 des Aufnahmeträgers 7 angeordnet, und zwar an einander zugekehrten Seiten 26 und 27 der besagten Rahmenelemente 12 und 14.

Schließlich ist zumindest der Schalter 21 als Reed-Kontakt-Relais ausgebildet und besitzt einen Magnet und Kontaktzungen, welche Kontaktzungen mit Anschlussdrähten verbunden sind. Sobald ein Magnetfeld des Magnets über den Anschlussdrähten wirksam ist wird ein elektrischer Kontakt bewerkstelligt.

## Patentansprüche

1. Lastenträger für Kraftfahrzeuge, insbesondere Personenkraftwagen, vorzugsweise zum Transport von wenigstens einem Fahrrad, welcher Lastenträger einen Grundträger und einen Aufnahmeträger für das Fahrrad besitzt, wobei der Aufnahmeträger in Fahrzeuglängsrichtung des Personenkraftwagens zwischen einer Ruhestellung und einer Betriebsstellung und vice versa verstellbar ist, **dadurch gekennzeichnet, dass** zwischen Grundträger (6) und Aufnahmeträger (7) wenigstens eine Schalteinrichtung (16) vorgesehen ist, die in Abhängigkeit der Ruhstellung (Rs) bzw. der Betriebsstellung (Bs) und/oder einer Zwischenstellung (Zs) außerhalb der Ruhestellung (Rs) bzw. Betriebsstellung (Bs) einen oder mehrere elektrische Verbraucher (17, 18 und 19; 20) beeinflusst.

2. Lastenträger nach Anspruch 1, **dadurch gekennzeichnet, dass** die Schalteinrichtung (16) einen Schalter (21) für die Ruhestellung (Rs) und einen Schalter (22) für die Betriebstellung (Bs) aufweist.

3. Lastenträger nach den Ansprüchen 1 und 2, **dadurch gekennzeichnet, dass** wenigstens ein Schalter (21 oder 22) der Schalteinrichtung (16) zur Beeinflussung von vorzugsweise einer Warneinrichtung (23) des Kraftfahrzeugs ausgebildet ist.

4. Lastenträger nach Anspruch 3, **dadurch gekennzeichnet, dass** die Warneinrichtung (23) akustische und/oder visuelle Signale erzeugt.

5. Lastenträger nach Anspruch 4, **dadurch gekennzeichnet, dass** die Warneinrichtung (23) in einem Fahrgastraum des Kraftfahrzeugs untergebracht ist.

6. Lastenträger nach Anspruch 5, **dadurch gekennzeichnet, dass** die Warneinrichtung (23) an einer Schalttafel im Fahrgastraum angeordnet ist.

7. Lastenträger nach Anspruch 1, **dadurch gekennzeichnet, dass** ein mit der Schalteinrichtung (16) zusammenarbeitender elektrische Verbraucher (19, 20) Heckleuchten (24 und 25) des Lastenträgers (16) umfasst.

8. Lastenträger nach den Ansprüchen 1 und 2, **dadurch gekennzeichnet, dass** wenigstens ein Schalter (21 oder 22) zwischen Rahmenelementen (12 und 14) des Grundträgers (6) und des Aufnahmeträgers (7) vorgesehen ist.

9. Lastenträger nach einem oder mehreren der vorangehenden Ansprüche, **dadurch gekennzeichnet, dass** der Schalter (21 und 22) nach Art eines Reed-Kontakt-Relais ausgebildet ist.
